# EUROPEAN PATENT APPLICATION

(11) **EP 3 057 206 A1**
(43) Date of publication of application: **17.08.2016**
(21) Application number: 16155643.6
(22) Date of filing: 15.02.2016
(51) Int. Cl.: H02K 3/24, H02K 3/52, H02K 9/19

(54) **LUBRICANT CHANNEL ON A STATOR WINDING SUPPORT**

(30) Priority: 13.02.2015 US 201514622323
(71) Applicant: Hamilton Sundstrand Corporation, Charlotte, NC 28217 (US)
(72) Inventor: PATEL, Dhaval, Loves Park, IL 61111 (US); FRISKE, Gordon W., Rockford, IL 61107 (US); MANOGUE, Brady A., Beloit, WI 53511 (US); MACONAGHY, Shaun, Shabbona, IL 60550 (US); KOESTER, Kevin J., Winnebago, IL 61088 (US); SHERMAN, William D., Kingston, IL 60145 (US)
(74) Representative: Hughes, Andrea Michelle

(57) **Abstract**

A stator for a generator includes a core having a back iron 38 that is annular in shape and poles 64 that extend inward from the back iron, a hoop having an annular shape that is radially inward from the back iron, and a plurality of winding supports 42 surrounding the poles. Each winding support includes a tooth 44 extending radially inward from the hoop and surrounding a corresponding pole with the tooth having a first end adjacent to the hoop and a second end radially inward from the first end and a first channel on a first axial side of the tooth extending from the second end to the first end. The stator also includes a plurality of windings 41 with each winding wrapped around a corresponding tooth so that each winding is spaced from the tooth at the first channel.

## Description

### BACKGROUND

The present disclosure relates to a generator and, in particular, to a stator for a generator.

Typically, a generator includes a rotor having a plurality of coils (made up of electrically conductive wires) wrapped around elongated poles on a rotor core. The rotor is driven to rotate by a source of rotation: a prime mover such as a turbine rotor. The generator rotor rotates in proximity to a stator, and the rotation of the rotor, which is an electromagnet due to electricity running through the coils, induces voltage in the stator. The voltage in the stator can be applied to external electrical components, providing electrical power to those components. The electricity running through the coils is supplied by an exciter, which is a separate rotor-stator component also driven by the source of rotation. The exciter stator includes a plurality of windings (made up of electrically conductive wires), much like the generator rotor coils, that are energized to create alternating North-South magnetic fields to induce a voltage in the exciter rotor as the rotor rotates. The voltage is rectified by a diode pack and then transferred to the main rotor. The exciter stator windings are wrapped around winding supports on a stationary exciter stator core, which is radially outward from the exciter rotor. The winding supports provide insulation against the stator core and support to hold the windings in place. Because the windings on the winding supports convey electricity, the windings may experience elevated temperatures. Therefore, it is advantageous to have a system that cools the exciter stator windings.

### SUMMARY

A stator for a generator includes a core having a back iron that is annular in shape and poles that extend inward from the back iron, a hoop having an annular shape that is radially inward from the back iron, and a plurality of winding supports surrounding the poles. Each winding support includes a tooth extending radially inward from the hoop and surrounding a corresponding pole with the tooth having a first end adjacent to the hoop and a second end radially inward from the first end and a first channel on a first axial side of the tooth extending from the second end to the first end. The stator also includes a plurality of windings with each winding wrapped around a corresponding tooth so that each winding is spaced from the tooth at the first channel.

A method of cooling a plurality of windings on a stator includes providing a core with an annular back iron and inward extending poles and a hoop with a plurality of radially inward extending winding supports surrounding the poles. Each winding support having a radially inward extending tooth encasing a corresponding pole with the tooth having a first channel on a first axial side and each winding support having a corresponding winding made up of an electrically conductive wire wrapped around the tooth. The method also includes introducing a cooling lubricant into the first channel and flowing the cooling lubricant adjacent to an inner layer of the electrically conductive wire of each winding through the first channel.

The present summary is provided only by way of example and not limitation. Other aspects of the present disclosure will be appreciated in view of the entirety of the present disclosure, including the entire text, claims, and accompanying figures.

### BRIEF DESCRIPTION OF THE DRAWINGS

FIG. 1 is a schematic sectional view of a generator.
FIG. 2A is a perspective view of an exciter stator with windings.
FIG. 2B is a perspective view of the exciter stator without windings.
FIG. 3 is a perspective view of one winding support of the exciter stator.
FIG. 4 is a cross-section partial view of one winding support of the exciter stator.

While the above-identified figures set forth embodiments of the present disclosure, other embodiments are also contemplated, as noted in the discussion. In all cases, this disclosure presents the invention by way of representation and not limitation. It should be understood that numerous other modifications and embodiments can be devised by those skilled in the art, which fall within the scope of the invention. The figures may not be drawn to scale, and applications and embodiments of the present invention may include features and components not specifically shown in the drawings.

### DETAILED DESCRIPTION

A stator for a generator is disclosed herein that includes at least one channel for cooling lubricant on each of a plurality of winding supports. Electrically conductive wire windings, which can experience elevated temperatures during operation of the generator, are wrapped around each of the plurality of winding supports, which insulate the windings from a stator core (a back iron and inwardly extending poles with pole tips). The channel allows easier access to inner layers of the electrically conductive wire windings so oil or another cooling lubricant, which is provided by lubricant jets on a radially inward rotor, can flow to inner layers of the wires and between individual wires of the windings to help prevent damage to the windings due to elevated temperatures.

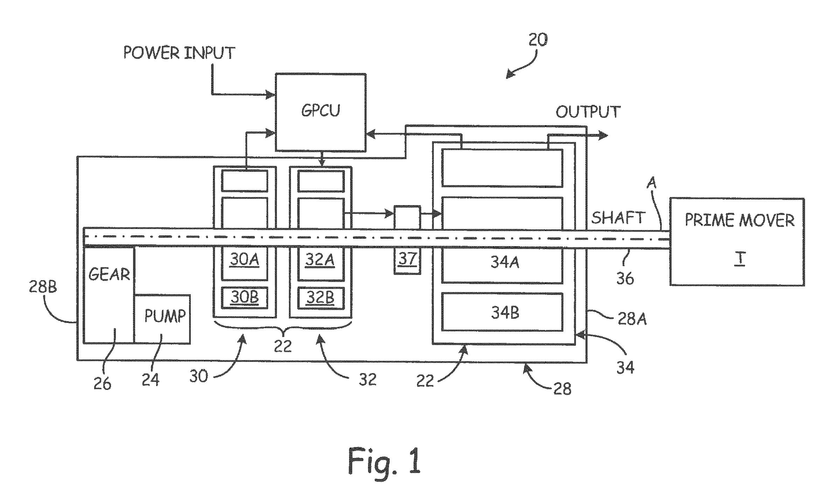

FIG. 1 is a schematic sectional view of a generator. Generator 20 is driven by prime mover T, which can be, for example, a gas turbine engine. Generator 20 produces electrical energy when being driven by prime mover T. Generator 20 generally includes dynamoelectric portion 22, positive displacement pump 24, and gearbox 26, all of which are contained within housing assembly 28. Although a variable frequency generator (VFG) is illustrated in the disclosed embodiment, it should be understood that other generator systems, such as a variable frequency starter generator (VFSG) and integrated drive generator (IDG), are also within the scope of the invention.

Dynamoelectric portion 22 in the disclosed, non-limiting embodiment is a three-phase machine that includes permanent magnet generator 30, exciter 32, and main generator 34 (the three phases) mounted along rotor shaft 36, which rotates about axis of rotation A. Permanent magnet generator 30 includes rotor assembly 30A and stator assembly 30B, exciter 32 includes rotor assembly (exciter rotor) 32A and stator assembly (exciter stator) 32B, and main generator 34 includes rotor assembly 34A and stator assembly 34B. Stator assemblies 30B, 32B, and 34B are installed in housing assembly 28 and do not rotate while rotor assemblies 30A, 32A, and 34A are installed on rotor shaft 36 and rotate in unison. Housing assembly 28 can be closed at one end by drive-end cover assembly 28A through which rotor shaft 36 extends and at the other end by non-drive-end cover assembly 28B through which rotor shaft 36 does not extend.

Permanent magnet generator 30, with rotor assembly 30A and stator assembly 30B, supplies power for generator excitation, as well as power for other components of an electrical system. Exciter 32, with exciter rotor 32A and exciter stator 32B, receives field excitation from permanent magnet generator 30 through the generator power control unit (GPCU). The output of exciter 32 is supplied to rotor mounted diode pack 37. Diode pack 37 can be divided into six diodes to provide a three-phase full wave bridge rectification. Diode pack 37 then supplies main generator 34 with electricity to produce a magnetic field. Main generator 34, with rotor assembly 34A and stator assembly 34B, outputs power to supply external electrical energy needs.

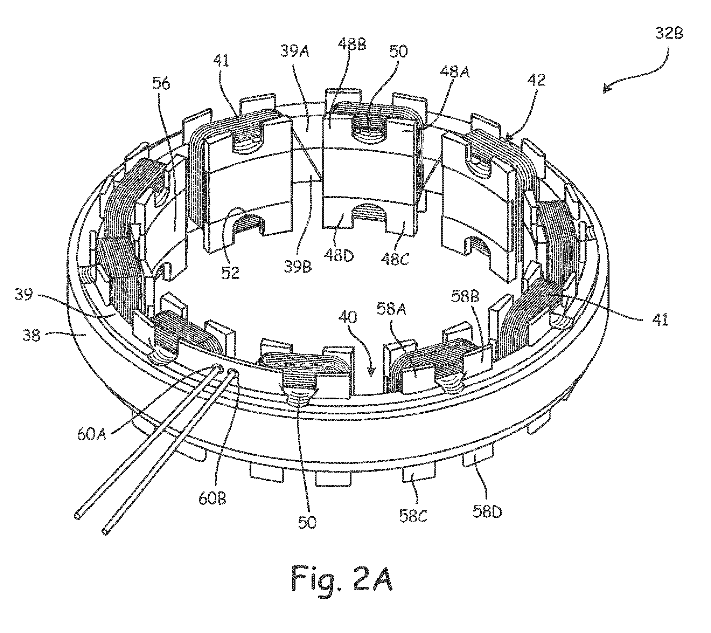

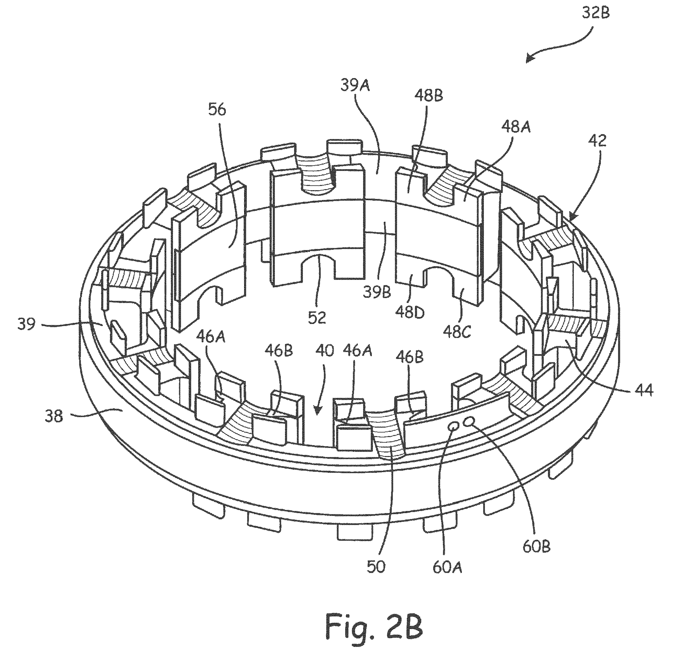

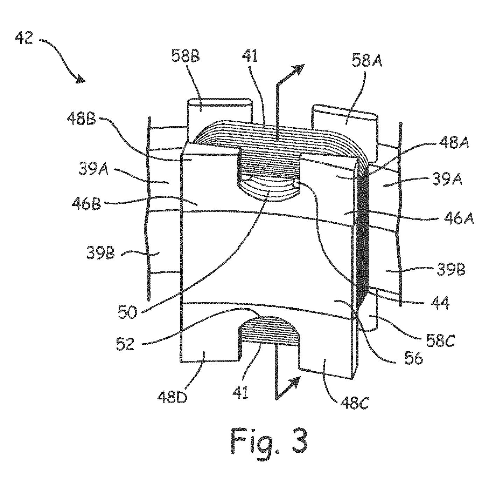

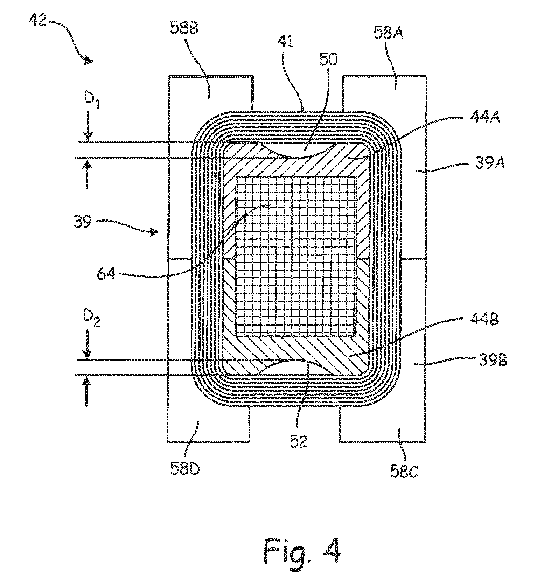

FIG. 2A is a perspective view of exciter stator 32B with windings, FIG. 2B is a perspective view of exciter stator 32B without windings, and FIG. 3 is an enlarged view of one winding support of exciter stator 32B. Exciter stator 32B includes core 38 (the outer annular ring of core 38 is the back iron while the inwardly extending components are the poles (seen in FIG. 4) having pole tips 56), hoop 39, slots 40, windings 41, and winding supports 42. Each winding support 42 includes tooth 44, first tooth tip 46A, second tooth tip 46B, first post 48A, second post 48B, third post 48C, fourth post 48D, first channel 50, and second channel 52. Hoop 39 includes fifth post 58A, sixth post 58B, seventh post 58C, eighth post 58D, wire inlet 60A, and wire outlet 60B. Hoop 39 and winding supports 42 can be split into top hoop/support 39A and bottom hoop/support 39B, as illustrated, or can be monolithically formed in further embodiments.

Exciter stator 32B is a stationary component of generator 20 that is radially outward from exciter rotor 32A. Exciter stator 32B is provided with DC voltage that excites each winding 41 wrapped around each of the plurality of winding supports 42. Each winding 41 can be a coil of a wire wrapped around each winding support 42 in alternating directions so that, when the wire is excited with DC power, the plurality of windings 41 produce an alternating North-South magnetic configuration. When exciter rotor 32A rotates within exciter stator 32B, the alternating North-South magnetic configuration of windings 41 of exciter stator 32B induces AC voltage in electrically conductive coils on exciter rotor 32A, which is then outputted to diode pack 37 to provide electricity to main generator 34.

Core 38 is the main structural component of exciter stator 32B and includes the back iron, which is the outer annular ring shown in FIG. 2A and 2B, and the poles (shown in FIG. 4 as poles 64), which are the inwardly extending components having pole tips 56 at a radially inner end. Core 38 can be made from a number of pieces or can be one integral and monolithic piece. The back iron of core 38 can have grooves, notches, holes, projections, or other configurations to which other components of exciter stator 32B can be inserted and/or attached. Core 38 can be made from metal, such as electrical steel, or another material. Additionally, core 38 can be laminated stacks that are bonded, interlocked, or welded together.

The insulating components of exciter stator 32B include hoop 39 and the plurality of winding supports 42. Hoop 39 is annular in shape and radially within the back iron of core 38. Hoop 39 insulates windings 41 from the back iron of core 38 and includes a number of openings through which the poles of core 38 extend inward. Hoop 39 can have grooves, notches, holes, projections, or other configurations that allow hoop 39 to be held adjacent to core 38. Hoop 39 can be bonded to the back iron of core 38 by adhesives or another fastener, and can be made from a variety of materials, including electrically insulating materials such as thermoplastics or other materials that are able to be additively manufactured or molded. Hoop 39 can be made from a number of pieces fastened together to form the annular shape with openings or can be one integral and monolithic piece constructed through molding, additive manufacturing, or another process. Additionally, hoop 39 and winding supports 42 can be made from the same material and can be integral and monolithic. As shown in FIGS. 2A, 2B, and 3, hoop 39 can also be constructed to be two generally annular pieces that, along with winding supports 42, mate at an axial joint to encase the poles of core 38. However, the material of hoop 39 should be able to provide an electrical barrier between the electrically conductive windings 41 and core 38 while also being able to handle the structural requirements of exciter stator 32B and winding supports 42.

Each winding support 42 extends radially inward from hoop 39 and has a number of components (discussed below) that function to hold windings 41 in place and insulate windings 41 from other components of exciter stator 32B, including the poles of core 38 (shown in FIG. 4 as pole 64), which are encased by each winding support 42. Each winding support 42 can be made from a number of pieces or can be one integral and monolithic piece with hoop 39 such that hoop 39 and the plurality of winding supports 42 are constructed from the same material so as to be one piece. As shown in FIGS. 2A, 2B, and 3, hoop 39 and the plurality of winding supports 42 can also be constructed to be two generally annular pieces (both hoop 39 and winding supports 42 are split axially to form top hoop/support 39A and bottom hoop/support 39B) that are secured together to form the hoop-winding support configuration. As mentioned above, each winding support 42, or hoop 39 and the plurality of winding supports 42 together, can be made from a variety of materials and constructed through molding, additive manufacturing, or another process.

As mentioned above, the poles of core 39 extending from the back iron are encased by corresponding winding supports 42 such that winding supports 42 insulate windings 41 from core 39 and other components of exciter stator 32B. While exciter stator 32B of FIGS. 2A and 2B shows a configuration that includes ten poles and ten corresponding winding supports 42, other stators can have any number of poles and winding supports 42, including configurations that have two, four, six, eight, or twelve poles and winding supports 42. Although the disclosed embodiment shows each winding support 42 having a similar configuration, each winding support 42 can have a differing configuration than other winding supports 42 within exciter stator 32B.

Tooth 44 of winding support 42 extends radially inward from hoop 39 with one end adjacent hoop 39 and the other forming a radially innermost end of tooth 44 (and winding support 42). Tooth 44 encases a corresponding pole of core 39 (as seen in FIG. 4). Tooth 44 of the disclosed embodiment is shown to have a generally rectangular cross-section extending radially inward (a partial cross-section is shown in FIG. 4), but can have another cross-section, such as circular, crowned, or oblong. However, winding support 42 should have a width (distance in the circumferential direction) that is sufficient to fully insulate windings 41 and allow for first channel 50 and second channel 52 to be present on tooth 44 (discussed in greater detail below). Additionally, tooth 44 can be bonded or fastened to the corresponding poles of core 39 a variety of ways, including adhesive, welds, or other fasteners. Tooth 44 should be long enough radially to completely encase the pole of core 39 and to allow windings 41 to wrap around tooth 44 a sufficient number of times (to form a coil of electrically conductive wires) but not so long as to physically interfere with the rotation of exciter rotor 34A radially within the innermost end of tooth 44 (and winding support 42).

First tooth tip 46A and second tooth tip 46B extend circumferentially from the radially innermost end of tooth 44 in opposite directions. The radially inner surface of first tooth tip 46A and second tooth tip 46B can form a segmented circular shape such that the plurality of first tooth tips 46A and second tooth tips 46B on each of the plurality of winding supports 42 form a generally cylindrical shape (with spaces between first tooth tip 46A of one winding support 42 and second tooth tip 46B of an adjacent winding support 42). A radially outer surface of first tooth tip 46A and second tooth tip 46B can be angled towards tooth 44, as shown in FIG. 2B, or have another configuration, such as a consistent radial width, but first tooth tip 46A and second tooth tip 46B should be configured so as to hold winding 41 wrapped around tooth 44 in place to help prevent movement. First tooth tip 46A and second tooth tip 46B are shown as extending axially along the total length of the innermost end of tooth 44, but can also be shorter or longer in axial length than tooth 44.

First post 48A extends axially outward from first tooth tip 46A in a first axial direction (towards the top of the illustration in FIGS. 2A, 2B, and 3), second post 48B extends axially outward from second tooth tip 46B in the first axial direction, third post 48C extends axially outward from first tooth tip 46A in a second axial direction (towards the bottom of the illustration in FIGS. 2A, 2B, and 3), and fourth post 48D extends axially outward from second tooth tip 46B in the second axial direction. First post 48A through fourth post 48D each have a radially inner surface that can follow the curve of the radially inner surface of tooth 44, first tooth tip 46A, and second tooth tip 46B, and each can have a radially outer surface that is adjacent to windings 41 and follows the configuration of the radially outer surface of first tooth tip 46A and second tooth tip 46B. Together, first post 48A through fourth post 48D provide support to winding 41 to help prevent winding 41 from moving radially inward and ensure that winding 41 does not come unwrapped/unfurled. While the disclosed embodiment shows each of the plurality of winding supports 42 having first post 48A through fourth post 48D, other designs could include configurations in which only a select number of winding supports 42 have one or all of first post 48A through fourth post 48D.

First channel 50 is located on a first axial side of tooth 44 (the top side of the illustration in FIGS. 2A, 2B, and 3 corresponding to the first axial direction), while second channel 52 is located on a second axial side of tooth 44 (the bottom side of the illustration in FIGS. 2A, 2B, and 3 corresponding to the second axial direction). First channel 50 and second channel 52 are each a radial groove (having an axial depth) in tooth 44 that allows lubricant, such as oil, to access inner layers of the electrically conductive wire of winding 41 by providing a space between the surface of tooth 44 and winding 41 (more easily seen in FIG. 4). While the disclosed embodiment shows first channel 50 and second channel 52 each as a singular groove of a consistent depth, other configurations are possible, including multiple grooves and/or a groove that has a varied depth or shape as it extends radially along tooth 44. As will be discussed further in regards to FIG. 4, the depth of first channel 50 and second channel 52 should be designed to allow a sufficient amount of lubricant to access the inner layers or winding 41 to help prevent overheating and damage to winding 41. Additionally, the depth and configuration of first channel 50 can be different than that of second channel 52, depending on design considerations.

First channel 50 and second channel 52 are generally located near the circumferential center of the tooth 44 on the first axial side and second axial side, respectively. First channel 50 can be arranged such that first post 48A, second post 48B, and first channel 50 form a generally U shape at the radially innermost end of winding support 42 on the first axial side. Second channel 52 can be arranged such that third post 48C, fourth post 48D, and second channel 52 form a generally U shape at the radially innermost end of winding support 42 on the second axial side. The width (distance in the circumferential direction) of first channel 50 and/or second channel 52 can also be wider than a distance between first post 48A and second post 48B and the distance between third post 48C and fourth post 48D, respectively.

Slot 40 is the space between adjacent winding supports 42 (the space between adjacent teeth 44, first tooth tips 46A, and second tooth tips 46B) and allows room for adjacent windings 41 on each winding support 42 to be wrapped and insulated from one another to form alternating North-South winding support 42 configurations. Depending on the number of poles and winding supports 42 of exciter stator 32B, slot 40 may be circumferentially wide or narrow.

Pole tip 56 is radially inward from winding supports 42 and at an innermost end of tooth 44 (and the radially inner surface of first tooth tip 46A and second tooth tip 46B). Pole tips 56 are part of core 38 such that the back iron, poles, and pole tips 56 of core 38 can be integral and monolithic.

Fifth post 58A extends axially outward from hoop 39 near each tooth 44 in the first axial direction (towards the top of the illustration in FIGS. 2A, 2B, and 3), sixth post 58B of extends axially outward from hoop 39 near each tooth 44 in the first axial direction, seventh post 58C extends axially outward from hoop 39 near each tooth 44 in the second axial direction (towards the bottom of the illustration in FIGS. 2A, 2B, and 3), and eighth post 58D extends axially outward from hoop 39 near each tooth 44 in the second axial direction. Fifth post 58A through eighth post 58D are similar to first post 48A through fourth post 48D with fifth post 58A being radially outward from first post 48A, sixth post 58B being radially outward from second post 48B, seventh post 58C being radially outward from third post 48C, and eighth post 58D being radially outward from fourth post 48D. Together, fifth post 58A through eighth post 58D provide support to winding 41 to help prevent winding 41 from moving radially outward and ensure that winding 41 does not come unwrapped/unfurled. Fifth post 58A through eighth post 58D can have the same shape and size as first post 48A through fourth post 48D or can have a different configuration, such as a different spacing between fifth post 58A and sixth post 58B and between seventh post 58C and eighth post 58D, respectively. There can also be a configuration in which fifth post 58A and sixth post 58B are attached (so that there is no space between them) and/or seventh post 58C and eighth post 58D are attached. While the disclosed embodiment shows fifth post 58A through eighth post 58D as part of hoop 39, fifth post 58A through eighth post 58D can also be on winding support 42.

Wire inlet 60A and wire outlet 60B are holes extending through fifth post 58A, sixth post 58B, seventh post 58C, and/or eighth post 58D and allow the electrically conductive wire that makes up windings 41 to access the plurality of winding supports 42. As shown in FIGS. 2A and 2B, wire inlet 60A and wire outlet 60B are adjacent to one another and located on an extension between sixth post 58B adjacent one tooth 44 and fifth post 58A adjacent another tooth 44. Even though wire inlet 60A and wire outlet 60B are shown adjacent one another in FIGS. 2A and 2B, exciter stator 32B could have multiple wire inlets 60A and wire outlets 60B and/or a configuration that does not have wire inlet 60A adjacent to wire outlet 60B.

Each winding 41 is an electrically conductive wire wrapped in a coil around a corresponding tooth 44 of each winding support 42. The electrically conductive wire forming winding 41 is wrapped around tooth 44 many times with the number of wraps depending on the strength of the magnetic field needed to be induced, the space available for winding 41, and the length of the electrically conductive wire. In the disclosed embodiment, the electrically conductive wire enters exciter stator 32B through wire inlet 60A and wraps around one winding 41. After winding 41 is sufficiently wrapped, the electrically conductive wire is then strung to an adjacent winding 41 and is wrapped in an opposite direction than the previous winding 41. The direction of wrapping of each winding 41 continues so that adjacent windings 41 are wrapped in opposite directions. This wrapping continues until all windings 41 have been wrapped and the electrically conductive wire exits exciter stator 32B through wire outlet 60B. Adjacent windings 41 are wrapped in opposite directions so that when electricity is provided to the electrically conductive wire, adjacent windings 41 produce opposite magnetic fields (creating alternating North-South magnetic configurations). Other configurations of exciter stator 32B can include multiple electrically conductive wires that wrap one or a few windings 41 (and enter and exit through multiple wire inlets 60A and wire outlets 60B, respectively).

As mentioned above, windings 41 can have an elevated temperature during operation of exciter stator 32B due to electricity running through the electrically conductive wire of windings 41. If the temperature of windings 41 becomes too elevated, windings 41 can become damaged. To help prevent damage, a cooling lubricant, such as oil, is provided to windings 41 from lubricant jets on exciter rotor 32A radially within exciter stator 32B. The lubricant jets spray lubricant onto exciter stator 32B. Because first channel 50 and second channel 52 provide a space between winding 41 and tooth 44 into which lubricant can flow (as seen more fully in FIG. 4), first channel 50 and second channel 52 allow lubricant to reach the inner layers of the electrically conductive wire of winding 41 and help keep operational temperatures of windings 41 from becoming elevated, thereby reducing the likelihood that windings 41 will become damaged.

FIG. 4 is a cross-sectional view of a portion of hoop 39 and one winding support 42. Hoop 39 and winding support 42 can be split into top hoop/support 39A and bottom hoop/support 39B, which mate together to encase pole 64. Top hoop/support 39A includes top tooth portion 44A, first channel 50 (with depth D₁), fifth post 58A, and sixth post 58B. Bottom hoop/support 39B includes bottom tooth portion 44B, second channel 52 (with depth D₂), seventh post 58C, and eighth post 58D. Wrapped around top tooth portion 44A and bottom tooth portion 44B is winding 41 made up of the electrically conductive wire.

First channel 50 and second channel 52 can have a U-shaped configuration, as shown in FIG. 4, with a depth D₁ and D₂, respectively, that is deep enough to allow a sufficient amount of lubricant to access the inner layers of the electrically conductive wires of winding 41 to help prevent overheating. Depth D₁ of first channel 50 and depth D₂ of second channel 52 can vary along a length (in a radially direction; i.e., into/out of the page in FIG. 4) of first channel 50 and second channel 52, respectively, to provide more or less lubricant to different areas of winding 41. The disclosed embodiment shows first channel 50 and second channel 52 as having a consistent cross-section that extends along an entire length (in a radially direction) of top tooth portion 44A and bottom tooth portion 44B, respectively, but first channel 50 and second channel 52 can have a cross-sectional area that is reduced or enlarged along the radial length of top tooth portion 44A and bottom tooth portion 44B, respectively, or different than one another. As mentioned above, first channel 50 and second channel 52 can also be multiple grooves with differing depths. Additionally, first channel 50 and second channel 52 do not have to extend entirely radial in a line, but can also weave or angle circumferentially depending on design considerations. First channel 50 and second channel 52 can have different cross-sectional shapes (other than a U shape), such as a box shape (rectangular cross-section), V shape, W shape, or a channel having a wavy bottom surface.

First channel 50 and second channel 52 help prevent winding 41 on each winding support 42 from overheating by allowing lubricant (provided by lubricant jets on exciter stator 32A) to access the inner layers of the electrically conductive wire of windings 41. First channel 50 and second channel 52 allow access to inner layers of windings 41 by forming a space between tooth 44 (or top tooth portion 44A and bottom portion 44B) and winding 41 into which cooling lubricant can flow. Without first channel 50 and second channel 52, the cooling lubricant is only able to contact the outer layers of the electrically conductive wire of windings 41. Because first channel 50 and second channel 52 allow lubricant to more completely access winding 41, first channel 50 and second channel 52 help prevent damage to each winding 41 on each winding support 42 by reducing the operational temperature of windings 41.

### Discussion of Possible Embodiments

The following are non-exclusive descriptions of possible embodiments of the present invention.

A stator for a generator includes a core having a back iron that is annular in shape and poles that extend inward from the back iron, a hoop having an annular shape that is radially inward from the back iron, and a plurality of winding supports surrounding the poles. Each winding support includes a tooth extending radially inward from the hoop and surrounding a corresponding pole with the tooth having a first end adjacent to the hoop and a second end radially inward from the first end and a first channel on a first axial side of the tooth extending from the second end to the first end. The stator also includes a plurality of windings with each winding wrapped around a corresponding tooth so that each winding is spaced from the tooth at the first channel.

The stator of the preceding paragraph can optionally include, additionally and/or alternatively, any one or more of the following features, configurations and/or additional components:

A second channel on a second axial side of the tooth extending from the second end to the first end so that each winding is spaced from the tooth at the second channel.

A depth of the first channel and a depth of the second channel are configured to allow a sufficient amount of cooling lubricant to access an inner layer of electrically conductive wire that makes up each winding.

The hoop and the plurality of windings are constructed from a first component and a second component mated together at an axial joint to encase the poles.

The hoop and the plurality of winding supports are constructed using additive manufacturing.

The plurality of windings are constructed from one continuous electrically conductive wire.

The core includes ten poles and the plurality of winding supports includes ten corresponding winding supports.

A first tooth tip extending circumferentially from the second end of the tooth and a second tooth tip extending circumferentially from the second end of the tooth in an opposite direction from the first tooth tip.

A first post and a second post extending outward in a first axial direction with the first post extending outward from the first tooth tip and the second post extending outward from the second tooth tip, a third post and a fourth post extending outward in a second axial direction with the third post extending outward from the first tooth tip and the fourth post extending outward from the second tooth tip, a fifth post and a sixth post extending axially outward from the hoop near the first end of the tooth in the first axial direction, and a seventh post and an eighth post extending axially outward from the hoop near the first end of the tooth in the second axial direction.

The first post, second post, third post, fourth post, fifth post, sixth post, seventh post, and eighth post are adjacent to each winding and prevent each winding wrapped around a corresponding tooth from movement.

The first channel, first post, and second post form a U shape on the first axial side of the tooth.

A method of cooling a plurality of windings on a stator includes providing a core with an annular back iron and inward extending poles and a hoop with a plurality of radially inward extending winding supports surrounding the poles. Each winding support having a radially inward extending tooth encasing a corresponding pole with the tooth having a first channel on a first axial side and each winding support having a corresponding winding made up of an electrically conductive wire wrapped around the tooth. The method also includes introducing a cooling lubricant into the first channel and flowing the cooling lubricant adjacent to an inner layer of the electrically conductive wire of each winding through the first channel.

The method of the preceding paragraph can optionally include, additionally and/or alternatively, any one or more of the following features, configurations, steps, and/or additional components:

Each winding support further includes a second channel on a second axial side into which cooling lubricant can be introduced and flow to the inner layer of the electrically conductive wire of each winding.

The step of introducing the cooling lubricant onto an outer layer of the electrically conductive wire of each winding.

The cooling lubricant penetrates into an interior of each winding so as to contact multiple layers of the electrically conductive wire.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A stator for a generator comprising:
a core (38) having a back iron that is annular in shape and poles (64) that extend inward from the back iron;
a hoop (39) having an annular shape that is radially inward from the back iron;
a plurality of winding supports (42) surrounding the poles, each winding support comprising:
a tooth (44) extending radially inward from the hoop and surrounding a corresponding pole, the tooth having a first end adj acent to the hoop and a second end radially inward from the first end; and
a first channel (50) on a first axial side of the tooth extending from the second end to the first end; and
a plurality of windings (41), each winding wrapped around a corresponding tooth so that each winding is spaced from the tooth at the first channel.

2. The stator of claim 1, each winding support further comprising:
a second channel (52) on a second axial side of the tooth extending from the second end to the first end so that each winding is spaced from the tooth at the second channel.

3. The stator of claim 2, wherein a depth of the first channel and a depth of the second channel are configured to allow a sufficient amount of cooling lubricant to access an inner layer of electrically conductive wire that makes up each winding.

4. The stator of any preceding claim, wherein the hoop and the plurality of windings are constructed from a first component and a second component mated together at an axial joint to encase the poles.

5. The stator of any preceding claim, wherein the hoop and the plurality of winding supports are constructed using additive manufacturing.

6. The stator of any preceding claim, wherein the plurality of windings are constructed from one continuous electrically conductive wire.

7. The stator of any preceding claim, wherein the core includes ten poles and the plurality of winding supports includes ten corresponding winding supports.

8. The stator of any preceding claim, each winding support further comprising:
a first tooth tip (46A) extending circumferentially from the second end of the tooth; and
a second tooth tip (46B) extending circumferentially from the second end of the tooth in an opposite direction from the first tooth tip.

9. The stator of claim 8, each winding support further comprising:
a first post (48A) and a second post (48B) extending outward in a first axial direction, the first post extending outward from the first tooth tip and the second post extending outward from the second tooth tip;
a third post (48C) and a fourth post (48D) extending outward in a second axial direction, the third post extending outward from the first tooth tip and the fourth post extending outward from the second tooth tip;
a fifth post (58A) and a sixth post (58B) extending axially outward from the hoop near the first end of the tooth in the first axial direction; and
a seventh post (58C) and an eighth post (58D) extending axially outward from the hoop near the first end of the tooth in the second axial direction.

10. The stator of claim 9, wherein the first post, second post, third post, fourth post, fifth post, sixth post, seventh post, and eighth post are adjacent to each winding and prevent each winding wrapped around a corresponding tooth from movement.

11. The stator of claim 9 or 10, wherein the first channel, first post, and second post form a U shape on the first axial side of the tooth.

12. A method of cooling a plurality of windings on a stator, the method comprising:
providing a core with an annular back iron and inward extending poles and a hoop with a plurality of radially inward extending winding supports surrounding the poles, each winding support having a radially inward extending tooth encasing a corresponding pole with the tooth having a first channel on a first axial side, each winding support having a corresponding winding made up of an electrically conductive wire wrapped around the tooth;
introducing a cooling lubricant into the first channel; and
flowing the cooling lubricant adjacent to an inner layer of the electrically conductive wire of each winding through the first channel.

13. The method of claim 12, wherein each winding support further includes a second channel on a second axial side into which cooling lubricant can be introduced and flow to the inner layer of the electrically conductive wire of each winding.

14. The method of claim 12 or 13, further comprising:
introducing the cooling lubricant onto an outer layer of the electrically conductive wire of each winding.

15. The method of claim 12, 13 or 14, wherein the cooling lubricant penetrates into an interior of each winding so as to contact multiple layers of the electrically conductive wire.
